# EUROPEAN PATENT APPLICATION

(11) **EP 2 515 083 A1**
(43) Date of publication of application: **24.10.2012**
(21) Application number: 12164445.4
(22) Date of filing: 17.04.2012
(51) Int. Cl.: G01D 4/00, H02J 3/14, H04L 12/26, H04L 12/28

(54) **Methods and systems for monitoring a grid control system**

(30) Priority: 19.04.2011 US 201113089869
(71) Applicant: General Electric Company, Schenectady, NY 12345 (US)
(72) Inventor: Boot, John Christopher, Atlanta, GA Georgia 30339-8402 (US)
(74) Representative: Picker, Madeline Margaret

(57) **Abstract**

A detection device (160) for monitoring at least one message transmitted between components included within a grid control system (100) is provided. The detection device includes a memory device (310) configured to store a rationality database (350) that includes at least one rule (352), and a processor (315) coupled to the memory device and configured to receive the at least one message and to compare the at least one message with the at least one rule to determine a rationality of the at least one message.

## Description

### BACKGROUND OF THE INVENTION

The present application relates generally to grid control systems and, more particularly, to a detection device, system, and method for use in monitoring messages exchanged by components included within a grid contsystem.

Power generated by an electric utility is typically delivered to a customer via an electric grid. The power generation and delivery system is monitored and controlled by a grid control system. The grid control system generally includes a large number of individual subsystems, each of which may also include multiple components. Typically, information is received from many of the subsystems/components, and used to control operation of the electrical grid. For example, some power utilities utilize what is referred to herein as a "smart grid" or Advanced Metering Infrastructure (AMI) power network. Known AMI networks each include a plurality of subsystems that communicate with an operations subsystem that is typically located at the utility and remotely from the subsystems. Using an AMI network, a power utility may communicate with individual loads within a customer's premises and selectively reduce power consumption during peak usage periods. As such, a power utility may reduce power to low priority loads, while maintaining power to high priority loads.

At least some known AMI networks receive and transmit data in a proprietary vendor format or in a format in accordance with a standard created by an industry consortium or standards development organization. Examples of such standards are International Electrotechnical Commission (IEC) 61850, IEC 61968, and ZigBee ®. ZigBee ® is a registered trademark of ZigBee Alliance, Inc., of San Ramon, CA. In some instances, data may be transmitted to a device in the correct format, but may instruct the device to perform an erroneous and/or irrational function. Instructions to perform an erroneous and/or irrational instruction may be the result of network tampering, or the result of component malfunction. A device component within the AMI network that performs an erroneous and/or irrational function may use excessive energy, create billing issues, cause physical damage, and/or inconvenience a customer and/or an energy provider.

### BRIEF DESCRIPTION OF THE INVENTION

In one aspect, a detection device for monitoring at least one message transmitted between components included within a grid control system is provided. The detection device includes a memory device configured to store a rationality database that includes at least one rule, and a processor coupled to the memory device and configured to receive the at least one message and to compare the at least one message with the at least one rule to determine a rationality of the at least one message.

In another aspect, a system for monitoring at least one message transmitted between components included within a grid control system is provided. The system includes a first network component, a second network component coupled to the first network component and configured to transmit the at least one message to the first network component, and a detection device configured to receive the at least one message from the second network component and to determine a rationality of the at least one message.

In yet another aspect, a method for monitoring at least one message transmitted between a plurality of components within a grid control system is provided, the plurality of components including a first network component and a second network component. The method includes transmitting the at least one message from the first network component to the second network component, intercepting the at least one message using a detection device, and determining a rationality of the at least one message using the detection device.

### BRIEF DESCRIPTION OF THE DRAWINGS

Fig. 1 is a block diagram of an example power generation and delivery system.
Fig. 2 is a schematic diagram of an electrical grid control system that may be used with the power generation and delivery system shown in Fig. 1.
Fig. 3 is a block diagram of an example detection device that may be used with the electrical grid control system shown in Fig. 2.
Fig. 4 is a flowchart of an example method for use in monitoring messages sent between components of the electrical grid control system shown in Fig. 2.

### DETAILED DESCRIPTION OF EMBODIMIENTS THE INVENTION

The systems and methods described herein facilitate enabling robust communications in an advanced metering infrastructure (AMI) system. More specifically, because the systems and methods described herein monitor the rationality of messages transmitted between components of the AMI system, erroneous and/or irrational messages can be identified and dealt with accordingly. Furthermore, the systems and methods described herein facilitate detecting erroneous and/or irrational messages at several different locations within the AMI system.

Technical features of the methods and systems described herein include at least one of:
(a) transmitting at least one message from a first network component to a second network component in a grid control system; (b) intercepting the at least one message using a detection device; and (c) determining a rationality of the at least one message using the detection device.

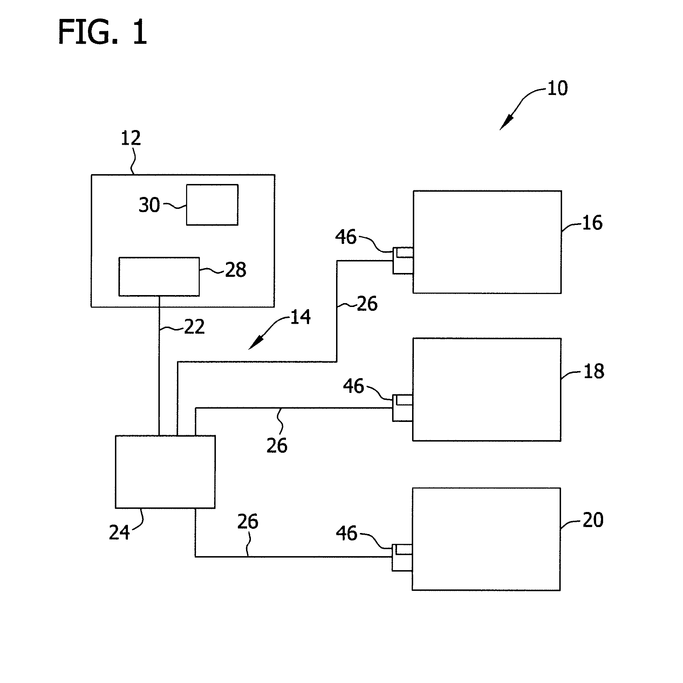

Fig. 1 is a block diagram of an example power generation and delivery system 10. In the example embodiment, power generation and delivery system 10 includes an electric utility 12, an electrical grid 14, and a plurality of customer or energy user locations, such as, a first customer location 16, a second customer location 18, and a third customer location 20. Customer locations 16, 18, and 20 may include, but are not limited to only including, a residence, an office building, an industrial facility, and/or any other building or location that receives energy from the electric utility 12. Although described herein as including three locations, power generation and delivery system 10 may include any suitable number of locations that allows power generation and delivery system 10 to function as described herein.

In the example embodiment, electricity is delivered from electric utility 12 to customer locations 16, 18, and 20 via electrical grid 14. In the example embodiment, electrical grid 14 includes at least one transmission line 22, an electrical substation 24, and a plurality of distribution lines 26. Moreover, in the example embodiment, electric utility 12 includes an electric power generation system 28 that supplies electrical power to electrical grid 14. Electric power generation system 28 may include a generator (not shown) driven by, for example, a gas turbine engine, a hydroelectric turbine, and/or a wind turbine (none shown). Alternatively, electric power generation system 28 may utilize solar panels (not shown) and/or any other electricity generating device that enables system 10 to function as described herein.

In the example embodiment, electric utility 12 also includes a distribution control center substation 30 that controls energy production and delivery. Distribution control center substation 30 is illustrated as being included within electric utility 12, but alternatively, distribution control center substation 30 may be external to electric utility 12 (e.g., remotely located) and in communication with electric utility 12. Furthermore, although described as including a computer system (not shown), distribution control center substation 30 may include any suitable processing device that enables power generation and delivery system 10 to function as described herein. The term processing device, as used herein, refers to central processing units, microprocessors, microcontrollers, reduced instruction set circuits (RISC), application specific integrated circuits (ASIC), logic circuits, and any other circuit or processor capable of executing the functions described herein.

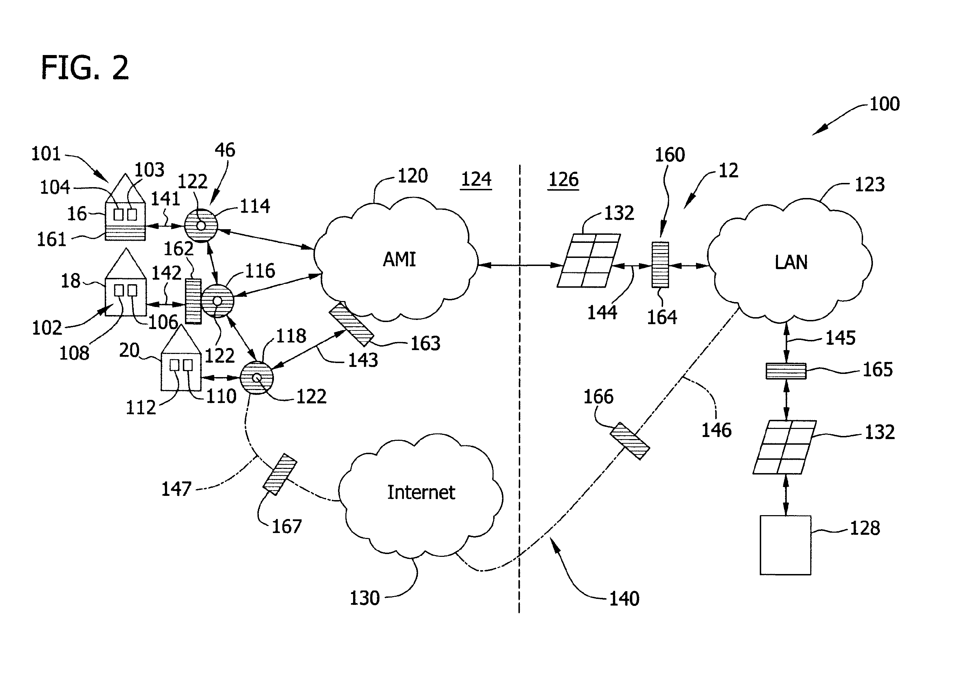

In the example embodiment, customer locations 16, 18, and 20 each include an end user meter 46. In the example embodiment, end user meters 46 are part of an advanced metering infrastructure (AMI). AMI is an example of a bi-directional communication system that enables electric utility 12 to measure and collect information relevant to energy usage from customer locations 16, 18, and 20, as well as to provide data and control signals to end user meter 46. Information may also be collected from other subsystems of electric power generation and delivery system 10. Fig. 2 is a schematic diagram of example grid control system 100 that may be used with the generation and delivery system 10 (shown in Fig. 1). Grid control system 100 includes a plurality of locations 101. In the example embodiment, grid control system 100 monitors the delivery of energy from electric utility 12 to first customer location 16, second customer location 18, and third customer location 20. Alternatively, grid control system 100 includes any number of locations 101 that enables grid control system 100 to function as described herein.

Grid control system includes a plurality of energy consumers 102. In the example embodiment, first location 16 includes at least one communication device 103 and at least one energy consumer 104 coupled to communication device 103. Second location 18 includes at least one communication device 106 and at least one energy consumer 108 coupled to communication device 106. Third location 20 includes at least one communication device 110 and at least one energy consumer 112 coupled to communication device 110. As used herein, the term "couple" is not limited to a direct mechanical and/or electrical connection between components, but may also include an indirect mechanical and/or electrical connection between components. In the example embodiment, communication devices 103, 106, and 110 include a wired network adapter, a wireless network adapter, a mobile telecommunications adapter, and/or any other device that enables grid control system 100 to function as described herein. For example, communication devices 103, 106, and 110 transmit and receive data, such as power management messages, between energy consumers 104, 108, and 112, respectively, and electric utility 12. In the example embodiment, energy consumer 102 is a device, such as appliances, machines, lighting systems, security systems, computer systems, and/or any other load that consumes energy received from electric utility 12. For example, energy consumer 102 could include a washing machine, an air conditioning unit, a pool pump, and/or a heating unit.

Grid control system 100 also includes a plurality of end user meters 46. In the example embodiment, communication device 103 is coupled to a first end user meter 114, communication device 106 is coupled to a second end user meter 116, and communication device 110 is coupled to a third end user meter 118. Alternatively, grid control system 100 includes any number of end user meters 46 than enables grid control system 100 to function as described herein.

In the example embodiment, energy consumer 104 is coupled to first meter 114 via communication device 103, energy consumer 108 is coupled to second meter 116 via communication device 106, and energy consumer 112 is coupled to third meter 118 via communication device 110. In an alternative embodiment, first location 16, second location 18, and third location 20 do not include communication devices 103, 106, and 110, respectively. In this alternative embodiment, energy consumer 104 is coupled directly to first meter 114, energy consumer 108 is coupled directly to second meter 116, and energy consumer 112 is coupled directly to third meter 118. In the example embodiment, first meter 114 measures the energy consumed by energy consumer 104, second meter 116 measures the energy consumed by energy consumer 108, and third meter 118 measures the energy consumed by energy consumer 112. Meters 114, 116, and 118 transmit data representative of the energy consumed (hereinafter referred to as "energy consumption measurements") to an AMI network 120, as described more fully below.

Each of the plurality of end user meters 46 may include, or be coupled to, a memory device 122. In the example embodiment, end user meters 46 are programmed to obtain energy consumption measurements at a start of a billing period and at an end of the billing period and to store energy consumption measurements within memory device 122. For example, the billing period may be thirty days, a calendar month, and/or any other time period that allows grid control system 100 to function as described herein. Moreover, in the example embodiment, end user meters 46 are enabled to measure and store energy consumption measurements periodically, such as every hour, every ten minutes, and/or at any other suitable frequency. End user meters 46 may also measure energy consumption upon a request (i.e., "on demand") submitted by, for example, electric utility 12. In the example embodiment, end user meters 46 are programmed to automatically transmit the energy consumption measurements to AMI network 120.

In the example embodiment, AMI network 120 is located external to electric utility 12 and coupled in communication with a local area network (LAN) 123 at electric utility 12. Alternatively, AMI network 120 is located at the electric utility 12, such as within a data center (not shown) of electric utility 12. In the example embodiment, AMI network 120 receives energy consumption measurements from end user meters 46 and stores the energy consumption measurements in one or more data files within a memory device (neither shown).

In the example embodiment, grid control system 100 includes a consumer region 124 and a utility company region 126. Consumer region 124 includes AMI network 120, end user meters 46, and locations 101. Locations 101 may each include a home area network (HAN). In the example embodiment, utility company region 126 includes electric utility 12 and LAN 123, which communicates with AMI network 120. LAN also communicates with at least one utility system 128. In the example embodiment, utility system 128 includes a user interface for use by a utility company operator (neither shown). Alternatively, utility system 128 may include any system that allows grid control system 100 to function as described herein. LAN 123 may also communicate with end user meters 46 via a public network 130. For security purposes, firewalls 132 are located between LAN 123 and AMI network 120, and between LAN 123 and utility system 128. Alternatively, firewalls 132 may be located at any location within grid control system 100 that enables grid control system 100 to function as described herein.

In the example embodiment, energy consumers 104, 108, 112, meters 114, 116, and 118, AMI network 120, and LAN 123 each receive and transmit data between one another in a standard format. The format may be a proprietary vendor format or a format in accordance with a standard created by an industry consortium or standards development organization. Examples of such standards are International Electrotechnical Commission (IEC) 61850, IEC 61968, and ZigBee ®. The transmitted data includes a plurality of messages, and each message includes at least one packet. In the example embodiment, grid control system includes a plurality of communication paths 140 between components for use in transmitting messages between the components. The plurality of communication paths 140 may include a first communication path 141 between first location 16 and first meter 114, a second communication path 142 between second location 18 and second meter 116, a third communication path 143 between third meter 118 and AMI network 120, a fourth communication path 144 between AMI network 120 and LAN 123, a fifth communication path 145 between LAN 123 and utility system 128, a sixth communication path 146 between LAN 123 and public network 130, and a seventh communication path 147 between public network 130 and third meter 118.

In the example embodiment, messages transmitted between components of grid control system 100 include data for use in controlling or adjusting operation of energy consumers and/or end user meters included in generation and delivery system 10, for example, energy consumer 102 and end user meter 46. More specifically, a message may be transmitted from end user meter 46 instructing energy consumer 102 to activate, deactivate, reduce power, and/or increase power. Moreover, a message may instruct energy consumer 102 to activate, deactivate, reduce power, and/or increase power for a predetermined duration of time. Further, a message may instruct end user meter 46 to connect or disconnect from grid control system 100. Moreover, a message may instruct end user meter 46 and/or energy consumer 102 to transmit energy consumption measurements at a given time and/or at a predetermined frequency. Alternatively, a message may instruct energy consumer 102 and/or end user meter 46 to perform any function that enables grid control system 100 to function as described herein.

In the example embodiment, grid control system 100 includes at least one detection device 160. Detection device 160 intercepts and monitors messages transmitted via the plurality of communication paths 140. Detection device 160 may be coupled to any of plurality of communication paths 140. In the example embodiment, grid control system includes a first detection device 161 coupled to first communication path 141 and configured to monitor messages within first location 16, a second detection device 162 coupled to second communications path 142 and configured to monitor messages between second location 18 and second meter 116, a third detection device 163 coupled to third communication path 143 and configured to monitor messages between third meter 118 and AMI network 120, a fourth detection device 164 coupled to fourth communication path 144 and configured to monitor messages between AMI network 120 and LAN 123, a fifth detection device 165 coupled to fifth communication path 145 and configured to monitor messages between LAN 123 and utility system 128, a sixth detection device 166 coupled to sixth communication path 146 and configured to monitor messages between LAN 123 and public network 130, and a seventh detection device 167 coupled to seventh communication path 147 and configured to measure messages between public network 130 and third meter 118. Alternatively, detection device 160 may be coupled to any communication path 140 and monitor any message transmitted in grid control system 100 that enables grid control system 100 to function as described herein.

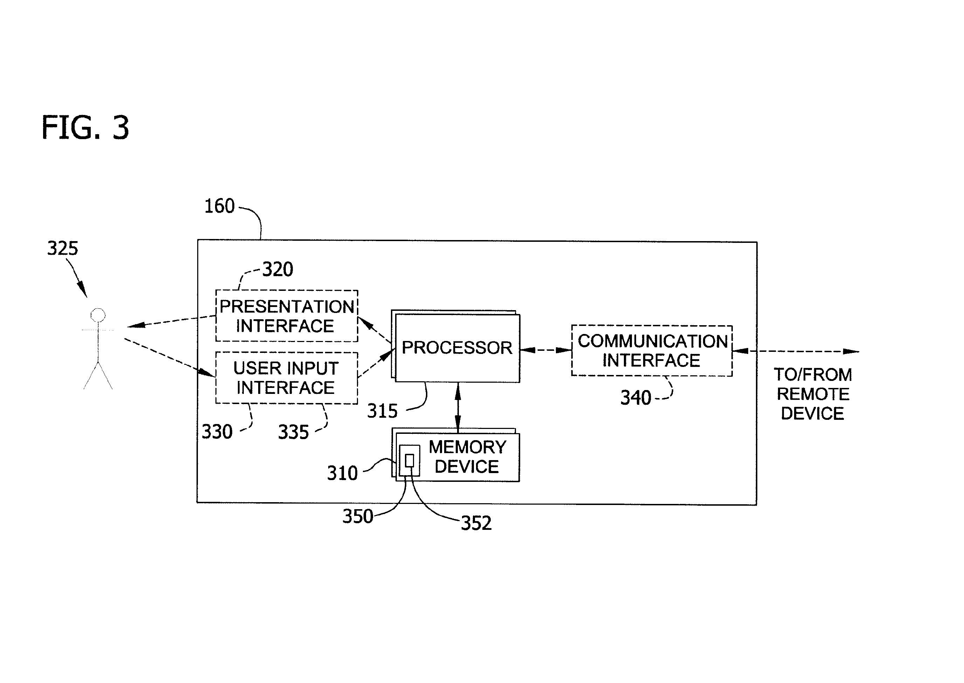

Fig. 3 is a block diagram of detection device 160, which may be used with grid control system 100 (shown in Fig. 2). In the example embodiment, detection device 160 is separate from other components of grid control system 100. In an alternative embodiment, detection device 160 is included within at least one component of grid control system 100, such as energy consumer 102, and/or end user meter 46 (shown in Fig. 2). In the example embodiment, detection device 160 includes a memory device 310 and a processor 315 coupled to memory device 310 for executing instructions. In some embodiments, executable instructions are stored in memory device 310. Detection device 160 is configured to perform one or more operations described herein by programming processor 315. For example, processor 315 may be programmed by encoding an operation as one or more executable instructions and storing the executable instructions in memory device 310 and/or retrieving the executable instructions from memory device 310. In one embodiment, processor 315 may include one or more processing units (e.g., in a multi-core configuration).

Memory device 310 is one or more devices that enable information, such as executable instructions and/or other data, to be stored and retrieved. Memory device 310 may include one or more computer readable media, such as, without limitation, dynamic random access memory (DRAM), static random access memory (SRAM), a solid state disk, a hard disk, and/or any suitable memory that enables processor 315 to store, retrieve, and/or execute instructions and/or data.. Memory device 310 may be configured to store, without limitation, application source code, application object code, source code portions of interest, object code portions of interest, configuration data, execution events and/or any other type of data.

In the example embodiment, detection device 160 includes a presentation interface 320 that is coupled to processor 315. Presentation interface 320 presents information, such as application source code and/or execution events, to a user 325. For example, presentation interface 320 may include a display adapter (not shown in Fig. 3) that may be coupled to a display device, such as a cathode ray tube (CRT), a liquid crystal display (LCD), an organic LED (OLED) display, and/or an "electronic ink" display. In some embodiments, presentation interface 320 includes one or more display devices.

Moreover, in the example embodiment, detection device 160 includes an input interface 330, such as a user input interface 335. In the example embodiment, user input interface 335 is coupled to processor 315 and receives input from user 325. User input interface 335 may include, for example, a keyboard, a pointing device, a mouse, a stylus, a touch sensitive panel (e.g., a touch pad or a touch screen), a gyroscope, an accelerometer, a position detector, and/or an audio user input interface. A single component, such as a touch screen, may function as both a display device of presentation interface 320 and user input interface 335.

In the example embodiment, detection device 160 includes at least one communication interface 340. Communication interface 340 is coupled to processor 315 and is configured to be coupled in communication with one or more remote devices or networks, such as energy consumer 102, end user meter 46, AMI network 120, and/or LAN 123. Communication interface 340 may include, without limitation, a wired network adapter, a wireless network adapter, and/or a mobile telecommunications adapter. Communication interface 340 transmits data to, and/or receives data from, one or more remote devices and/or networks, such as energy consumer 102, end user meter 46, AMI network 120, and/or LAN 123.

In the example embodiment, detection device 160 receives and/or intercepts a message transmitted between components in grid control system 100, for example, a message transmitted from second location 18 to second meter 116. The message includes a plurality of packets. Processor 315 receives the plurality of packets and assembles the packets to form the message. Similarly, when detection device 160 sends a message, processor 315 disassembles the message into packets and transmits the packets. Alternatively, detection device 160 may receive and transmit the entire message at once, without assembling the message from packets or disassembling the message into packets.

In the example embodiment, referring to Figs. 2 and 3, after receiving and/or intercepting the message, detection device 160, and more specifically processor 315, determines whether the message transmitted over a communication path, for example second communication path 142, passes a rationality test. The rationality test determines whether the content of the transmitted message is rational or irrational. While messages may be transmitted in the correct format, the content of the transmitted messages may be erroneous and/or irrational. For example, a message may include an instruction for energy consumer 108 to deactivate for two hundred hours. While the format of the transmitted message may be correct (specifying a duration of time for energy consumer 108 to deactivate), it is unlikely that the intended result is to actually deactivate energy consumer 108 for two hundred hours. Rather, the intent may have been to deactivate energy consumer 108 for two hours. Therefore, this intercepted message is referred to herein as irrational.

To detect such erroneous and/or irrational messages and/or instructions, in the example embodiment, memory device 310 stores a rationality database 350. Rationality database 350 includes at least one rule 352 that defines rational and/or irrational messages. Rational messages are transmitted messages that include instructions that cause a grid control system component, such as energy consumer 102 or end user meter 46, to perform a correct business function (e.g., deactivating energy consumer 102 for two hours), and irrational messages are transmitted messages that include instructions that cause a grid control system component to perform an incorrect business function (e.g. deactivating energy consumer 102 for two hundred hours).

To determine whether the transmitted message is rational or irrational, detection device 160 compares the message with rules 352 in rationality database 350. Accordingly, processor 315 is configured to compare the transmitted message with at least one rule 352 to determine whether the transmitted message is rational. Rules 352 in rationality database 350 may define rational and/or irrational messages in terms of permissible numbers of transactions between components in grid control system 100, durations of requests, and/or number of connects and/or disconnects for energy consumer 102 and/or end user meter 46. Alternatively, rules 352 may define rational and/or irrational messages in any suitable terms that enable detection device 160 to function as described herein.

Rules 352 may specify threshold values that define whether a transmitted message is rational or irrational. For example, rationality database 350 may include a rule that defines rational messages for deactivating energy consumer 102 as those transmitted messages that instruct energy consumer 102 to deactivate for a duration lasting no longer than five hours. Accordingly, if detection device 160 receives a transmitted message instructing energy consumer 102 to deactivate for two hundred hours, detection device 160 determines the transmitted message is irrational.

Rules 352 may be input into rationality database 350 by user 325 using user input interface 335. Rules 352 may be user-defined and/or predefined. For example, user 325 may manipulate predefined rules 352 to create new rules. In an alternate embodiment, processor 315 generates rules 352 based on a volume of previously transmitted messages analyzed by detection device 160, and stores generated rules 352 in memory device 310. For example, after monitoring a plurality of messages instructing energy consumer 102 to deactivate for periods of time in a range of one to ten hours, processor 315 may generate a rule 352 that defines messages instructing energy consumer 102 to deactivate for more than two times an upper limit of previously received instructions (i.e., twenty hours).

In the example embodiment, if the transmitted message is determined to be rational by detection device 160, detection device 160 transmits the message to its intended destination. More specifically, processor 315 disassembles the message into packets and instructs communication interface 340 to transmit the message as packets to its intended destination. In the example embodiment, if the transmitted message is determined to be irrational, detection device 160 prohibits the message from being transmitted to its intended destination. Alternatively, detection device 160 may flag and/or identify the message as irrational and/or notify grid control system 100 that the message is irrational, but still transmit the message to its intended destination. Detection device 160 may notify grid control system 100 by generating and/or transmitting an alert signal. Moreover, in some embodiments, detection device 160 remedies the erroneous and/or irrational message, such that a message intercepted by detection device 160 and determined to be an irrational message is transmitted by detection device 160 as a rational message. For example, a message received at detection device 160 with instructions for deactivating energy consumer 102 for one-hundred hours and determined to be irrational may be transmitted from detection device 160 as a message that instructs energy consumer 102 to be deactivate for ten hours.

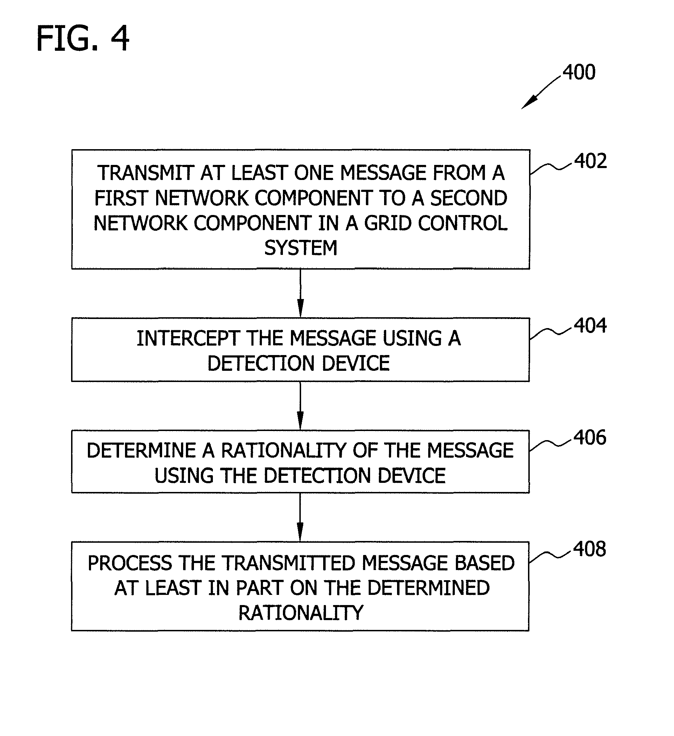

Fig. 4 is a flowchart of an example method 400 for use in monitoring messages sent between components of a grid control system, for example, grid control system 100 (shown in Fig. 2). In the example embodiment, method 400 includes transmitting 402 at least one message from a first network component, for example, energy consumer 104 and/or a end user meter 46 (shown in Fig. 2) in grid control system 100, to a second network component, for example, energy consumer 104 and/or end user meter 46. Method 400 further includes intercepting 404 the message using a detection device, for example, detection device 160 (shown in Fig. 3). Method 400 further includes determining 406 a rationality of the transmitted message using the detection device 160. The method further includes processing 408 the transmitted message based at least in part on the determined rationality.

The detection device, systems, and methods described herein facilitate preventing erroneous and/or irrational messages from being sent between components in a grid control system, even though the messages may be in an expected format. Furthermore, the detection device described herein may be positioned in numerous different locations within a power network and/or grid control system, facilitating identification of irrational messages sent between a plurality of components within the grid control system.

The systems and methods described herein facilitate robust communications in an AMI system. More specifically, because the systems and methods described herein monitor the rationality of messages transmitted in the system, erroneous and/or irrational messages can be identified and dealt with accordingly. Further, the systems and methods described herein facilitate detecting erroneous and/or irrational messages at several different locations within the AMI system.

Example embodiments of systems and methods for monitoring messages transmitted between components of a grid control system are described above in detail. The systems and methods are not limited to the specific embodiments described herein, but rather, components of the systems and/or steps of the methods may be utilized independently and separately from other components and/or steps described herein. For example, the detection device described herein may also be used in combination with other energy systems and methods, and is not limited to practice with only the systems described herein. Rather, the example embodiment can be implemented and utilized in connection with many other utility and/or energy applications.

As used herein, the term "computer" refers to a system that includes at least one processor and at least one memory device. The processor may include any suitable programmable circuit including one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above represent examples only, and thus are not intended to limit in any way the definition and/or meaning of the term "processor."

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A detection device (160) for monitoring at least one message transmitted between components included within a grid control system (100), said detection device comprising:
a memory device (310) configured to store a rationality database (350) that includes at least one rule (352); and
a processor (315) coupled to said memory device and configured to receive the at least one message and to compare the at least one message with said at least one rule to determine a rationality of the at least one message.

2. A detection device (160) in accordance with Claim 1, wherein said at least one rule (352) defines at least one of a rational and an irrational message.

3. A detection device (160) in accordance with Claim 1 or Claim 2, wherein said processor (315) is further configured to generate said at least one rule (352) based on a plurality of previously transmitted messages.

4. A detection device (160) in accordance with Claim 1, 2 or 3, wherein said detection device is included within at least one component within the grid control system (100).

5. A detection device (160) in accordance with any one of Claims 1 to 4, wherein said at least one component comprises one of an energy consumer (102, 104, 108, 112), a meter (114, 116, 118), a component of an advanced metering infrastructure (AMI) network (120), and a component of a local area network (LAN) (123).

6. A detection device (160) in accordance with any one of Claims 1 to 5, wherein said processor (315) is configured to prevent transmission of the at least one message when said processor determines the at least one message is irrational.

7. A detection device (160) in accordance with any one of Claims 1 to 6, wherein said processor (315) is configured to generate an alert signal when said processor determines the at least one message is irrational.

8. A system for monitoring at least one message transmitted between components included within a grid control system (100), said system comprising:
a first network component;
a second network component coupled to said first network component and configured to transmit the at least one message to said first network component; and
a detection device (160) configured to receive the at least one message from said second network component and to determine a rationality of the at least one message.

9. A system in accordance with Claim 8, wherein said detection device (160) is at least one of included within at least one of said first network component and said second network component and coupled between said first network component and said second network component.

10. A system in accordance with Claim 8 or Claim 9, wherein at least one of said first network component and said second network component comprises one of an energy consumer (102, 104, 108, 112), a meter (114, 116, 118), a component of an advanced metering infrastructure (AMI) network (120), and a component of a local area network (LAN) (123).

11. A system in accordance with Claim 8, 9 or 10, wherein said detection device (160) is configured to prevent transmission of the at least one message to said first network component when said detection device determines the at least one message is irrational.

12. A system in accordance with any one of Claims 8 to 11, wherein said detection device (160) is configured to generate an alert signal when said detection device determines the at least one message is irrational.

13. A system in accordance with any one of Claims 8 to 12, wherein said detection device (160) is configured to determine the rationality of the at least one message based on at least one rule.

14. A system in accordance with Claim 13, said detection device (160) in accordance with any one of claims 1 to 7.

15. A method for monitoring at least one message transmitted between a plurality of components within a grid control system (100), the plurality of components including a first network component and a second network component, said method comprising:
transmitting the at least one message from the first network component to the second network component;
intercepting the at least one message using a detection device (160); and
determining a rationality of the at least one message using the detection device (160).
